# EUROPEAN PATENT SPECIFICATION

(11) **EP 2 592 550 B1**
(45) Date of publication and mention of the grant of the patent: **15.04.2015**
(21) Application number: 11290521.1
(22) Date of filing: 11.11.2011
(51) Int. Cl.: G06F 9/50, H04L 29/08

(54) **Distributed mapping function for large scale media clouds**
Verteilte Abbildungsfunktion für große Medien-Clouds
Fonction de cartographie distribuée pour nuages multimédia à grande échelle

(43) Date of publication of application: 15.05.2013
(73) Proprietor: ALCATEL LUCENT, 92100 Boulogne-Billancourt (FR)
(72) Inventor: Wahl, Stefan, 71701 Schwieberdingen (DE); Satzke, Klaus, 71732 Tamm (DE)
(74) Representative: Wetzel, Emmanuelle

(56) References cited:
- CA-A1- 2 510 626
- US-A1- 2004 133 626
- US-A1- 2009 150 565
- US-B1- 7 194 522
- US-B1- 7 512 702

## Description

The present document relates to cloud computing. In particular, the present document relates to methods and systems for cloud computing which enable the efficient and flexible placement of application components within a cloud.

The Internet is changing the way how users consume media. Enabled by Internet technologies, the evolution is quickly moving towards a point allowing users to enjoy media services like live 3D broadcasting, time-shifted viewing of live events or video on demand whenever wanted, wherever needed and on any preferred device. Even more, in the Internet, the user will not only be a spectator but an immersed participant. Web based services are the catalyst for a whole class of new personalized media centric applications, like massive sharing of multimedia content in real-time or immersive multimedia communication. These services will not be realized as a pure content stream, but as an orchestrated flow of media processing functions that will provide the requested data at the appropriate time, location and format. With the introduction of high definition video formats, the transferred data volume will outrun the size of the code building in the data transformation process. Therefore placing service components in an intelligent way on a distributed service infrastructure will provide a way to increase the scaling of the future Internet infrastructure. In other words, as the transferred data volumes increase, it may become more efficient to transfer and place SW components of a distributed application at appropriate positions within a cloud network.

US7194522B1 describes a content delivery and global traffic management network system. The system comprises a DNS server which load balances network requests among customer Web servers. US2009/0150565A1 describes a method for application sensitive forwarding of a request for a web service.

The present document addresses the technical problem of providing a cloud of computing devices (also referred to as nodes) which enable the efficient and flexible placement of service / application components.

The technical problem is solved by the independent claims. Preferred embodiments are described within the dependent claims.

According to an aspect a computing device (also referred to as a computing node or node) adapted for distributed cloud computing is described. The computing device is positioned in a first topological area. Typically, the distributed cloud (referred herein as a media cloud) comprising a plurality of such computing devices is partitioned into a plurality of topological areas (which may be further subdivided into one or more regions). The computing device comprises a topological list indicating a plurality of reference computing devices positioned in a plurality of topological areas other than the first topological area, respectively. In other words, the computing device holds a topological list which provides an indication (e.g. a network identifier) of at least one reference computing device positioned within each of the other areas (or regions) of the distributed cloud. The topological list may comprise one or two reference computing devices per other area (or region). Typically, the reference computing devices are randomly selected from the available list of computing devices within a region, in order to ensure that each computing device has a different anchor point to the region, thereby removing single points of failure.

The computing device comprises a local resource list indicating available computing resources of the computing device and of at least one neighbor computing device positioned in a neighborhood of the computing device. The neighborhood of the computing device may be defined by one or more neighborhood conditions which need to be met by the at least one neighbor computing device. The one or more neighborhood conditions may comprise a maximum round trip time between the computing device and the at least one neighbor computing device. Alternatively or in addition, the one or more neighborhood conditions may comprise the condition that the at least one neighbor computing device is positioned within the first, i.e. within the same, topological area.

Upon receiving a component placement request for a component of an application, the computing device is adapted to determine, based (only) on the topological list, if the component is to be placed in the first topological area or in one of the plurality of topological areas other than the first topological area. Typically, a component placement request comprises information regarding the preferred location of a sink or a source of the component / application. By way of example, the information regarding the preferred location of a sink or a source of the component may be derived from a description of the requirements of the particular component and other components of the application that the particular component is interworking with. The computing device may compare the preferred location with its own location and the location of the topological areas of the media cloud.

If it is determined that the component is to be placed in one of the plurality of topological areas other than the first topological area, the computing device is adapted to pass the component placement request to the reference computing device of the respective topological area of the plurality of topological areas other than the first topological area. In other words, if it is determined that another topological area is closer to the preferred location, the placement request is passed to the reference computing device (or to one of the reference computing devices) of the another topological area, wherein the reference computing device (i.e. the indication to the reference computing device) is taken from the topological list of the computing device. As such, the computing device is adapted to perform a topology management task based on its topological list, without the need to consult another computing device or a higher level network management entity. In other words, the topology management task is performed autonomously by the computing device.

If it is determined that the component is to be placed in the first topological area, the computing device is adapted to identify from the local resource list a selected computing device having the computing resources for executing the component of the application. In other words, if the computing device determines that the preferred location of the component lies within the first topological area (or within the region of the computing device), the computing device performs a resource management task based on the resource information available within its local resource list, without the need to consult another computing device or a higher level network management entity. This means that the resource management task is performed autonomously by the computing device.

The computing device may be adapted to receive information regarding the computing resources of the at least one neighbor computing device from the at least one neighbor computing device. This information may be pushed by the neighbor computing device(s) (e.g. in a periodic manner). Alternatively, the computing device may pull this information from the neighbor computing device(s) (e.g. in a periodic manner). This ensures that the local resource list is maintained up-to-date in order to perform resource management tasks. It should be noted that the information regarding the computing resources of the one or more neighbor computing devices from the at least one neighbor computing device may be associated with a category or an indication regarding the reliability of the stored information. The reliability of the stored information may decrease with the amount of time which has elapsed since the information has been received. By way of example, a first category may indicate exact (i.e. timely) information regarding the computing devices, a second category may indicate less exact (i.e. partly outdated) information, etc.

The computing device may be adapted to receive a list of first computing devices comprised within the first topological area. The list of first computing devices may be a total list of all the computing devices comprised within the first topological area. This list may be received upon request by the computing device (e.g. at an initialization stage of the computing device). The computing device may be adapted to select a plurality of neighbor computing devices from the list of first computing devices for the local resource list. The number of neighboring computing devices may be limited to a predetermined number. The number of neighboring computing devices may be smaller than the number of first computing devices comprised within the list of first computing devices.

The computing device may be adapted to select the plurality of neighbor computing devices based on the computing resources of the first computing devices and/or based on a bandwidth of a link between the computing device and the first computing devices and/or based on a round trip time between the computing device and the first computing devices. By way of example, the plurality of neighbor computing devices may be selected based on the link load or link occupation of the links of the selected computing devices. As such, the computing device may be adapted to build a local resource list from the list of first computing devices. This may be performed at an initialization stage. In addition, the computing device may be adapted to replace a neighbor computing device in the local resource list by a new neighbor computing device from the list of first computing devices, thereby adapting the local resource list (and the resource management task) to changes within the media cloud.

As indicated above, the topological areas may be sub-divided into one or more regions. In this case, the topological list may indicate a plurality of reference computing devices positioned in the one or more regions of the plurality of topological areas. Furthermore, the local resource list of the computing device may be limited to neighbor computing devices from the same region as the computing device.

The computing device may comprise an execution environment for executing a component of an application. The execution environment may provide processor capacity and memory capacity for executing the component. In addition, the execution environment may provide transmission and reception capacity for receiving and transmitting data processed by the component. The computing resources of a computing device may be any one or more of: processor resources of the computing device, memory resources of the computing device, bandwidth of a link to the computing device, and round trip time for communication with the computing device.

According to another aspect, a distributed network for cloud computing is described. The distributed network is referred to as a media cloud in the present document. The network comprises a first plurality of computing devices in a first topological area of the media cloud and a second plurality of computing devices in a second topological area of the media cloud. The first and second pluralities of computing devices may be designed as outlined in the present document. In particular, the first and second pluralities of computing devices comprise corresponding first and second pluralities of topological lists. In other words, each of the computing devices comprises a corresponding topological list. The first plurality of topological lists indicates a corresponding first plurality of reference computing devices of the second plurality of computing devices and vice versa. In particular, the first plurality of reference computing devices may be a random selection of the second plurality of computing devices and vice versa. As a result, the risk of single points of failure is reduced.

The distributed network may further comprise a first controller node and a second controller node in the first and second topological areas, respectively. The first and second controller nodes may provide an indication of the first and second plurality of computing devices, respectively. The first and second controller nodes may be integrated within respective computing devices of the media cloud. The first and second controller nodes may be accessed by each of the computing devices, in order to enable the computing devices to build up their topological list and their local resource list. The first and second controller nodes may have a complete view of the computing devices comprised within the first and second topological areas, respectively. As such, a computing device may select appropriate neighbor computing devices and representative computing devices for its local resource list and for its topological list. Furthermore, the first controller node may provide an indication to the second controller node and vice versa, thereby enabling a computing device of the first topological area to access the second controller node.

Typically, each of the first and second plurality of computing devices comprises a local resource list indicative of computing resources of a predetermined number of neighbor computing devices in a neighborhood of the respective computing device. As such, each of the first and second plurality of computing devices is adapted to process a component placement request based (only) on its local resource list and on its topological list, independently from the others of the first and second plurality of computing devices. In other words, the computing devices within the media cloud may process a component placement request independently from the other computing devices within the media cloud (based on the limited resource and topology information comprised within its local resource list and within its topological list).

According to a further aspect, a method for placing a component of an application in a distributed network of computing devices is described. The computing devices may be designed as outlined in the present document. The method comprises receiving a component placement request at a first computing device in a first topological area. The method proceeds in determining, based on a topological list of the first computing device, if the component is to be placed in the first topological area or in one of a plurality of topological areas other than the first topological area. If it is determined that the component is to be placed in one of the plurality of topological areas other than the first topological area, the component placement request is passed to a reference computing device of the respective topological area of the plurality of topological areas other than the first topological area. If it is determined that the component is to be placed in the first topological area, a selected computing device having computing resources for executing the component of the application is identified from a local resource list of the first computing device.

It should be noted that the selected computing device may receive the component placement request and may itself identify another computing device having computing resources for executing the component of the application from a local resource list of the selected computing device. In order to ensure convergence, the passing of the component placement request to another computing device from the local resource list may be submitted to an improvement condition, e.g. it may be imposed that the computing resources provided by the another computing device exceed the computing resources of the root node of the local resource list by a predetermined amount (e.g. 20%).

As indicated above, the component placement request may comprise information regarding a location of a sink or a source of data processed by the component or by the application. The topological area for placing the component may be determined based on the location of the sink of the source.

The method may comprise, during an initialization stage, determining relative positions of the computing devices of the distributed network using a Vivaldi algorithm and clustering the computing devices into the first topological area and into the plurality of topological areas other than the first topological area using a Meridian algorithm.

According to a further aspect, a software program is described. The software program may be adapted for execution on a processor and for performing the method steps outlined in the present document when carried out on a computing device.

According to another aspect, a storage medium is described. The storage medium may comprise a software program adapted for execution on a processor and for performing the method steps outlined in the present document when carried out on a computing device.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Fig. 1 shows an example arrangement of computing nodes within a cloud;
Fig. 2 shows an example regional grouping of computing nodes within a cloud;
Fig. 3 illustrates an example representation of the regional grouping of a plurality of computing nodes;
Fig. 4 shows an example block diagram of a computing node;
Fig. 5 illustrates an example resource and topology graph;
Fig. 6 illustrates the graph of Fig. 5 as an example memory table of a computing node;
Fig. 7 illustrates example components of an application; and
Fig. 8 illustrates an example optimization process of a resource graph.

Up to today increased transport capacity demands in the networks are mainly achieved by enhancing installed bandwidth in the networks either by technological breakthroughs or the installation of new infrastructure elements. But there exist substantial concerns, that this evolution of networks subject to increased capacity demands cannot be expected to last, at least at reasonable costs. As future network enhancements become more and more challenging, there is a need for alternative approaches to meeting the increasing capacity demands. A well established approach to handling an increasing demand for network capacity is to add "higher layer" intelligence to the networks. The added "higher layer" intelligence aims to reduce the overall traffic, thus enhancing available transport capacity e,g, by localizing traffic. The first success of this concept of "higher layer" intelligence was the introduction of Content Delivery Networks (CDN). CDNs basically enable the massive scale adoption of (media) services comprising broadcast delivery characteristics in the Internet.

However, there is an emerging trend towards personalized media streams, where the media streams need to undergo processing somewhere in the Internet, i.e. in the cloud, thereby enabling the evolution of e.g. IP-TV towards personalized "multi-view" video service (see e.g. Ishfaq Ahmad, "Multi-View Video: Get Ready for Next-Generation Television," IEEE Distributed Systems Online, vol. 8, no 3,2007, art. no, 0703-03006) or enabling cloud based gaming services like "OnLive" (see e.g. OnLive, http://www.onlive.com/). While CDNs are built for the efficient delivery of the same content to a multitude of receivers, the new trend to individualized content streams which requires processing within the network is challenging the Internet infrastructure.

Today's applications and corresponding cloud infrastructures are typically designed in a way that data is moved through the network towards a dedicated location (i.e. a data center) where the application is executed. Preserving this cloud computing paradigm in the future Internet design would result in huge amounts of traffic which need to be transported to "arbitrary" data centers, where the processing functionality for media streams is located. It is proposed in the present document to change this paradigm of a centralized application processing at designated data centers. In particular, an intelligent infrastructure is proposed which forces the movement of applications or parts of the applications according to application requirements. Such schemes can offload unnecessary "long distance" traffic from the networks by localizing traffic and thus will help to overcame the issue of limited availability of transport capacity in future networks.

Even with today's cloud infrastructures, offloading of computing infrastructure into the Internet has become a commodity. Cloud computing providers, like Amazon EC2, Rackspace or Microsoft Azure, offer their infrastructure or platforms as a service, providing features like automated scalability and instant deployment, which supports the very dynamic needs of Internet based services like Facebook or Animoto.

However, today's approach has a significant cost: today's approach increases the overall load on the core networks because instead of keeping traffic local, more traffic is routed to centralized data centers (provided by the cloud computing providers). The centralized data centers process the data and send it back to the requestors. While this seems to be feasible for traditional request/response based web-services, this centralized approach might break the design of the actual Internet architecture for massive media centric real-time applications like personalised MultiView video rendering.

It is proposed that the Internet embeds intrinsic capabilities to directly support a service oriented computing paradigm that enables developers and end-users to execute their personalized applications onto an integrated network and computing infrastructure.

Autonomous services should be the components from which such applications can be built. The autonomous services should not be bound to a specific host infrastructure hardware addressed by their physical instantiation on that machine but should become moveable objects, which can be dynamically deployed on the distributed computing resources and collocated to the data-flows between the sources and sinks of the data flows.

The autonomous services may make use of well-defined abstraction models of the services, in order to enable the dynamic composition of services and the potential adaptation or relocation of services if workflow or context conditions change. A loose coupling of service components should enable the interconnection of the service workflow on demand and should facilitate adaptations of the workflow needed to provide the same relevant data to the user by modifying the service composition (given that services and their interfaces have some semantic service description).

From a user's perspective, a cloud typically behaves like a centralized server. Nevertheless, the cloud typically utilizes an aggregated or distributed set of free resources in a coherent manner. By monitoring the computational load and the network resources, it is possible to dynamically scale-up and scale-down instances and manage the network load without necessarily applying QoS (Quality of Service) management mechanisms on the data-paths.

Especially in media applications such components can be implemented as data transformation services, i.e. entities, which consume data in order to generate another data stream. In other words, media applications may be modelled as a sequence of data transformation services. As such, video cameras are data sources that generated video data. Video processing components, like video codecs, scaling or framing components may allow for the transformation of data in order to adapt the media stream to a suited format e.g. for mobile terminals or TV displays. Image recognition can identify objects out of the video signal, which can be merged from different sources to generate a 3D model of the scene.

Using such a data transformation model and the original video streams of the cameras, a new personalized view for a user can be rendered and sent to the display. Such a service can be represented by a directed graph, which will be instantiated upon deployment time. During the instantiation process, the required resources are selected from an available resource pool. As a result of selecting the required resources during the instantiation process, the overall traffic imposed by the service onto the network will be reduced. In other words, the resource selection process may be directed at reducing the overall traffic imposed by the service onto the network. The resource selection process may furthermore consider optimizing QoE (Quality of Experience) aspects for consumers of the service.

Applications with varying service characteristics can benefit to a different extend from the Media Cloud (MC) concept. Major benefits can be achieved on applications that require a consistent flow of continuous data over a certain period of time or on applications that require the transfer of large amounts of data for processing. On the other hand, for applications which require only a very limited transfer of data, the service transfer overhead and the instantiation cost may exceed the gained benefits, As a consequence, it may be beneficial within the MC concept, to provide mechanisms allowing the retrieval of "meta-information" associated with data. Such "meta-information" associated with data may provide information on where the data is located, on how much data needs to be transferred for service execution, if the data is a constant media (e.g. video) stream or only a limited amount of data (e.g. a data file) which needs to be transferred prior to service execution.

In order to support media cloud scenarios inherently by the network architecture, some basic principles from the existing Internet architecture should be reconsidered. First, well-known principles from content networking should be extended to support the MC approach described in the present document. Content networks explore locality of data, i.e. instead of serving a request for data at the source, a local cached copy of the data is delivered. A scheme may be proposed that directly addresses the content and uses this information for routing purposes, instead of using the location where the content was generated for routing decisions.

An extension of the above mentioned scheme would be to not only address the content, but to also address a service that is able to provide the requested data and instantiate a processing pipeline to do the necessary transformations. Instead of performing centralized processing for all users in a single domain, media flows may be combined or split at appropriate locations exploiting intrinsic "multi-cast" capabilities in the network layer where available. This is beneficial over existing schemes, where multi-cast has to be explicitly incorporated by the service developer not knowing if "multi-cast" is supported in the network and therefore can only be achieved by means of overlay mechanisms.

If the traffic patterns of (media) flows exchanged between different service components are accurately predicted, the MC-enabled network described herein can operate on such flow patterns directly, instead of executing routing decisions on a per packet basis. Thus the MC-enabled network can enable efficient flow-based switching by providing available meta-information of media streams, exchanged between service components to the network. This information can enable the control plane in such MC-enabled networks to increase the overall throughput.

The MC scheme may also consider that a flow based switching paradigm is typically achieved at the cost of supporting more dynamicity in flow control handlers. In order to "limit" such costs, MC-enabled networks should provide capabilities to aggregate multiple data streams which are sharing paths between service components executed in same data centers. By introducing an aggregated granularity of joint streams between data centers, the control complexity in the core network itself can be limited.

A further requirement on the network when providing a MC is that flows should be handled in the network in such ways, that uninterrupted relocation of media flow end-points, which are no longer machines but services (i.e. service components), is supported. In consequence, for MC-enabled networks, client APIs like the socket interface may need to be modified. As MC-enabled services are built from self-contained components generally operating on input stream(s) of data to generate their output data, which is then distributed to the subsequent consumer components of this service, the use of dedicated sockets for communication purposes may no longer be sufficient and new paradigms may need to be considered in the context of a future Internet.

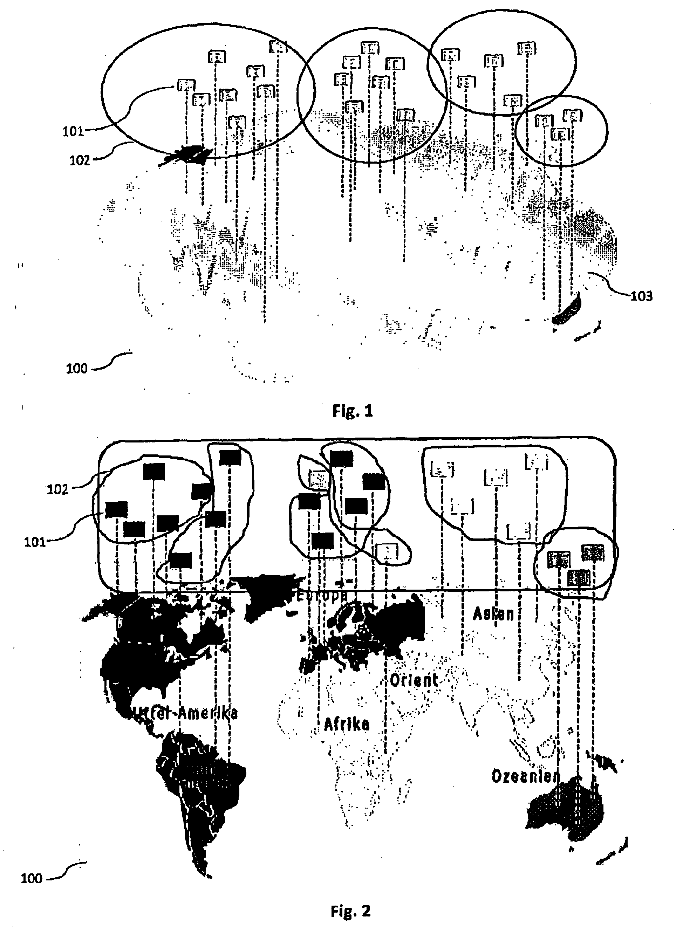

Fig. 1 illustrates a set 100 of computing nodes (also referred to as computing devices) 101. These computing nodes 101 form a flat arrangement without hierarchy, i.e. none of the computing nodes 101 of the set 100 has an overall control or management functionality. Each of the computing nodes 101 works independently from the other computing nodes 101 and solely relies on the individual information of the structure of the set 100 available at the computing node 101. The set 100 is referred to as a media cloud (MC) 100 in the present document. The different nodes 101 are interconnected via a communication network 103 such as the Internet.

It is proposed to use a distributed arrangement 100 of cloud computing appliances 101, in order to provide services or applications in a distributed manner (as opposed to a centralized manner). As a result of a distributed provisioning of services or applications, it is expected that the services or applications can be provided in a more resource efficient manner (notably with regards to the required transmission resources of the communication network 103). In this context, a fully distributed resource management (RM) system for the cloud computing appliances 101 is described, whereby none of the RM functions provided on the cloud computing appliances 101 has full knowledge with respect of the available resources and of the topology of the arrangement 100. Overall, it is desirable to provide an autonomous, distributed and autarkic resource management (RM) function of each of the nodes 101 of the MC 100.

In this context, an "autonomous" RM function means that each node 101 decides autonomously about its local resource neighbors, in order to decide where to have an application or a component of an application executed. Furthermore, an "autonomous" RM function decides autonomously on the representative of another cloud resource region. In other words, the MC 100 may be subdivided into a plurality of cloud areas 102, and each of the nodes 101 of a first area 102 may autonomously select a node 101 of a second area which is representative of the entire second area 102 (or a sub-region of the second area 102). As such, each node 101 may autonomously build up a local resource graph of the resources which are available in the neighborhood of the node 101 within the area 102 of the node. Furthermore, each node 101 may build up a topological list of representative nodes of the other area 102 of the MC 100, thereby providing each node 101 with a point of entry into all the area 102 (and possibly all of the subregions) of the MC 100.

The RM function of each node 101 is "distributed" in that a resource management function is placed on every node 101. In an embodiment, none of the nodes 101 has any particular special role (e.g. a coordination role). Each node 101 performs its RM function in an "autarkic" manner, meaning that a decision on where to place a software component within the MC 100 is solely performed by the node's RM function (without consulting a higher layer control function), In order to work in an "autarkic" manner, each node 101 holds an individual view of near/local resources (e.g. via a local resource graph) and an individual linkage to other areas and/or (sub)regions (e.g. via the topological list).

The nodes 101 of the MC 100 do not share a common overall network map of the position of all the nodes 101 within the MC 100. Instead, each node 101 comprises an individual network map which reflects the node's view of the entire MC 100. The individual network map may comprise the local resource graph (thereby indicating some of the neighboring modes within the same area or region 102) and the topological list (thereby providing at least one representative node of each area 102 (or region) of the MC 100).

Fig. 2 illustrates a similar arrangement (MC) 100 of nodes 101 as Fig. 1. The nodes 101 are positioned at different topological locations (e.g. the nodes 101 are distributed across different countries and/or continents). The complete set of nodes 101 of the MC 100 is subdivided into a plurality of areas 102 which may coincide with geographical areas of the network 100 of nodes 101. As will be outlined below, the areas 102 may be subdivided into one or more regions. The nodes 101 may determine the structure of the entire MC 100 using a distributed Vivaldi algorithm, thereby determining so called Vivaldi network coordinates for each node 101 within the MC 100. The Vivaldi algorithm may use a distributed technique to estimate propagation times (or round trip times) between the nodes 101 within the network 100. The estimated propagation times (or round trip times) may be used to determine "coordinates" of each node 101 within the MC 100, thereby providing a topological overview of the MC 100. Using a Meridian algorithm on the Vivaldi network coordinates of the nodes 101, groups of nodes 101 may be formed which meet one or more predetermined conditions (e.g. conditions with regards to a maximum round trip time within the groups). In other words, the nodes 101 of the MC 100 may be clustered such that each cluster meets the one or more predetermined conditions. The clusters are referred to herein as topological areas or topological regions (wherein areas may be subdivided into regions). As such, the nodes 101 of the MC 100 may autonomously determine a clustering of the nodes 101 into topological areas or topological regions. As a result, each node 101 is assigned to exactly one topological area and to exactly one topological region (if the area is subdivided into region(s)).

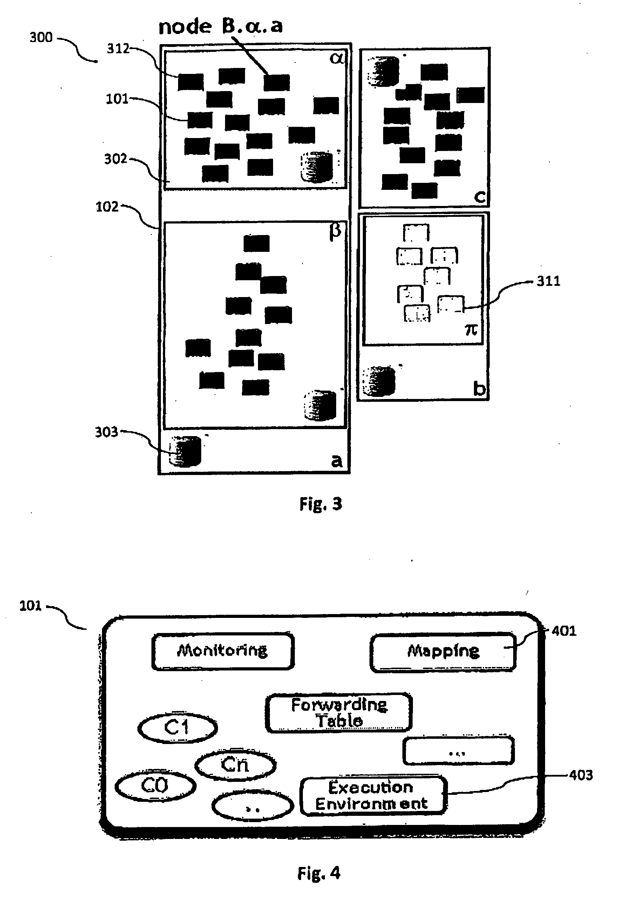

The topological clustering 300 of the nodes 101 is illustrated in Fig. 3. As indicated above, the topology of the MC 100 can be ordered into hierarchy levels (e.g. of areas 102 which comprise one or more regions 302). As such, a node 101 (e.g. the node B of Fig. 3) may be attributed to a region 302 (e.g. the region α) which itself is attributed to an area 102 (e.g. the area a).

A particular node 101 only has a limited view of the entire MC 100. This limited view of the MC 100 is used by the node 101 to perform an "autonomous" RM function. This part of the RM function may be referred to as the topology management performed by the node 101. In order to be able to reach each area 102 (or region 302) of the MC 100, each node 101 adds one (maybe several) representative of another area 102 (or region 302) into its topology tree or topology list (also referred to as topological list). If the nodes of the MC 100 are organized in one hierarchy level e.g. in areas 102 (without any subdivision into regions 302) then each root node 101 should store an (arbitrary) representative of any other area 102. If the nodes 101 are organized into two hierarchy levels e.g. regions 302 and areas 102 (each area 102 holding one or more regions 302) then each root node 101 should store an (arbitrary) representative of any other area 102 and an (arbitrary) representative of any of the regions 302 in this area 102.

As such, each node 101 puts itself into the root position of its local resource graph (RG) which provides the node 101 with the ability to perform resource management within an area 102 (or within a region 302). Furthermore, each node 101 puts itself into the root position of its topology graph (or topology list). This provides the node 101 with its individual view of the network. Each (root) node 101 adds one or more representatives of other regions 302 (and/or areas 102) into its topology graph (TG). It should be noted that any node within a region 302 can be a representative of this region 302, i.e. all nodes are equal and none of the nodes of an area 102 or region 302 has special tasks. In case of a two hierarchical topology (comprising areas 102 and regions 302), a maximum of two steps are required to address the correct region 302 from each of the nodes 101 using the TG of the node 101.

Fig. 4 illustrates a block diagram of an example node 101. In particular, the node 101 comprises a mapping function 401 which is used for the RM functionality of the node 101. Furthermore, the node 101 comprises an execution environment 403 for executing one or more components C0, C1, ..., Cn of one or more applications. The execution environment 403 provides the node's resources, e.g, the memory or processing capacity available at the node 101. Furthermore, the execution environment 403 may provide information regarding the links which are available to access the node 101. In particular, information regarding the bandwidth, delay or jitter of the links to the node 101 may be provided.

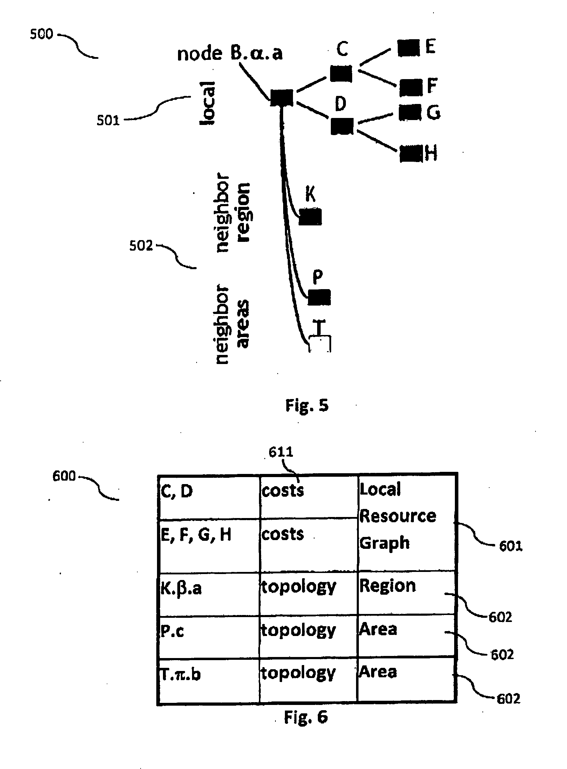

Fig. 5 illustrates an example graph 500 of a node 101. As indicated above, each node 101 (the node B in the region α in the area a) comprises a local resource graph 501 which comprises a list of other nodes within the same area / region. The local graph 501 may be organized in a hierarchical manner, wherein the hierarchy may represent a distance (d) of the other nodes with respect to the root node of the graph. The distance (d) may provide an indication that the precision or reliability of the information which is available with regards to the computing resources of the other nodes decreases (with increasing distance (d) or hierarchy level). In addition to the local resource graph 501, the graph 500 may comprise a topology graph 502 which indicates nodes that are representative of the other areas 102 or regions 302 of the MC 100.

The local and regional topological information may be stored within a table 600 as shown in Fig. 6. The table 600 indicates the nodes of the local resource graph 601 including the costs 611 associated with the respective nodes of the local resource graph 601. The costs 611 of another node may comprise resource values attached to the other node, e.g. available processing resources, available link bandwidth, available memory resources, achievable round trip time, etc. Furthermore, the table 600 provides a topology list 602 indicating the representative nodes of other regions and/or areas. The topology information entries may also hold multiple alternatives (instead of a single entry per region / area). As such, the memory table 600 is a representation of the nodes viewpoint of the MC 100. The number of nodes within the local resource list 601 is typically limited to a predetermined number which is smaller than the total number of nodes within an area / region. The number of nodes per area / region within the topology list 602 is limited to a number of nodes (e.g. one or two nodes) which is smaller than the total number of nodes within an area / region. This means that each node 101 only has a restricted view of the complete MC 100.

A node 101 manages the resources and topology in a table 600 (the graph 500 is used for illustration purposes). The resource entries 611 store the cost tuple information received from the neighboring nodes. Depending on the distance (d) from the root element, the precision of the cost tuple values can vary with respect of accuracy, actuality, aggregated view, etc.. The cost tuples may contain resource values such as processing, memory, link bandwidth, RTT (round trip time), etc.. In case of a component instantiation process (i.e. a component placement process), the node first analyzes its own resource state and then compares it with the nodes in the RG 601. The node decides whether it instantiates the component locally or forwards the request to a neighbor node within the RG 601.

The local resource graph 501, 601 may be used for the resource management performed by a node 101. As indicated above, each node performs an independent resource management function based on the limited information available at the node 101, in particular based on the local resource graph 501. The local resource graph 501 is based on a subset of nodes (which is typically taken from the same region). It should be noted that, for nodes 101 which are positioned near the border between a plurality of regions 302, the neighboring nodes within the local resource graph 501 may comprise nodes of other regions. Typically, the local resource graph (RG) tree depth is limited (to the near network neighbors, or to the vicinity). In a booting process of the node 101, the positions within the local resource graph may be negotiated from a given set of (regional) nodes. In other words, the node 101 may select an appropriate subset of available nodes to be placed within the local resource graph. A continuous (slow) optimization process allows to replace nodes by other nodes in the same region, This means, if a root node 101 observes that a node within its local resource node does not contribute (significantly) to the resource management function of the node 101, the root node 101 may decide to replace the non contributing node by another node from the neighborhood of the root node 101.

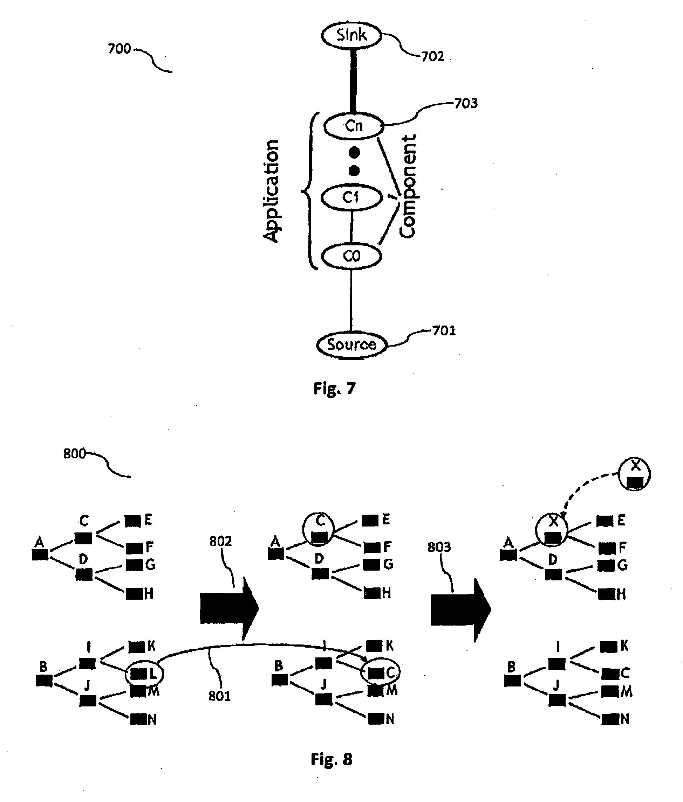

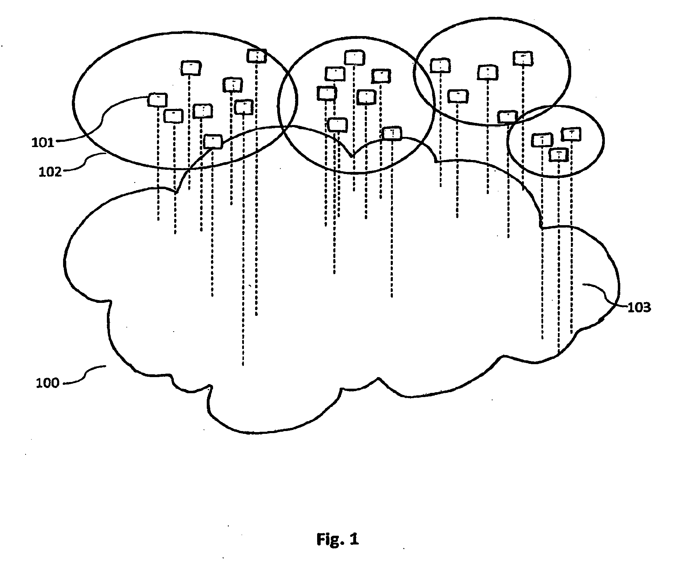

As such, the root node 101 may perform a permanent optimization process of its local RG 501. This is illustrated in Fig. 8 which shows an example updating process 800 of the local RG 501. Two root nodes (A, B) have independently setup their local RGs. All nodes of the RGs are located in the same region. The root nodes (can) permanently perform investigations to identify better suited nodes for their local RG and replace them (reference numeral 802). The nodes are replaced without any influence on running components (reference numeral 801). Typically, each node can have a maximum number of RG adjacent nodes, it has to leave the RG of root node A and must be replaced by another node - here X (reference numeral 803). In other words, each node may be part of the local resource graphs of a predetermined maximum number of other nodes. The predetermined maximum number may be selected such that the effort required for reporting information on the available computing resources to the other nodes is maintained at a reasonable level. This means that if the predetermined maximum number is reached, a node cannot be attributed to further local resource graphs anymore. Alternatively, the node may still be attributed to a new local resource graph, however, at the same time, the node has to be removed from another local resource graph. This is illustrated in Fig. 8.

As indicated above, each node 101 in the local RG is attributed with a cost scalar/tuple 611. This tuple 611 helps to decide where a new component instantiation request has to be placed. In other words, when deciding where to place the execution of the component of an application within the MC 100, the node 101 may consult the local RG 501 and place the component with one of the nodes comprised within the local RG 501, based on the costs 611 provided by the node. The nodes in the local RG 501 inform their RG root node 101 regularly about the current resource state. In other words, the nodes of the local RG 501 push information regarding their resources to the root node 101, thereby ensuring that the root node 101 can make substantiated resource management decisions. In particular, the local RG information (e.g. the cost 611) is used to identify one of the nodes within the local RG (incl. the root node itself) as an appropriate node for component placement. It should be noted that the placement process of a component can take several iterations. On the other hand, there is no central or partial central functionality for performing the resource management function, thereby removing the risk of a single point of failure.

As such, each node 101 has a limited network view 500 which comprises the local resource graph 501 and the topological graph 501 indicating one or more representative nodes of the other regions. As indicated above, the topology of the MC100 may be determined in a distributed manner using the Vivaldi and Meridian algorithms. At an initialization stage, each node 101 may be able to access the complete list of nodes within the same region / area. The node 101 uses this list of nodes to build the local resource graph 501. Furthermore, at the initialization stage, each node 101 may select at least one node from the remaining regions / areas. The selection of the at least one node of the remaining regions / areas should be performed in a random manner, in order to ensure that the nodes of a region have different representative nodes of the other regions, thereby preventing single point of failures or loopholes.

In the following, further details regarding the mapping function 401 provided by a node 101 are described. Based on the topology and resource information available at the nodes (i.e. the information 500, 600), the nodes of the MC 100 may determine on the (optimum) placement of software (media) components on the nodes 101 of a Media Cloud system 100. As shown in Fig. 7, an application 700 is typically composed of a plurality of components 703. By way of example, a conference call application comprises a plurality of audio codec (coding / decoding) components (one for each participant of the conference call), as well as a mixer component (for connecting the voice channels of the participants). Typically, an application 700 (and the components 703) has a source 701 (from which data is provided) and a sink 702 (to which data is provided). In the above mentioned examples, the individual participants of the conference call application may be considered to be sources and sinks. The task of the component placement process is to place the components 703 of the application 700 at appropriate locations within the MC100, in order to reduce the consumption of resources of the communication network 103. By way of example, by placing the audio codec component of a conference call application within the proximity of the respective participants, the transmission bandwidth required by the application can be reduced (as only encoded voice traffic is transmitted through the communication network 103). Furthermore, the mixer component of the conference call application should be placed at a central location between the participants of the conference call.

In Pig. 7, the different widths of the links between the different components 703 and between the source 701 and the sink 702 indicate different requirements regarding the links (rubber band model). Bands between components 703, which indicate a higher spring constant, indicate that the components 703 should be placed in proximity with respect to one another (e.g. on the same node)

The placement procedure should take into account the available node resource and the available link resources. Furthermore, the requirements of the application components 703 (e.g. with regards to processor resources, memory resources, link bandwidth, delay, jitter) should be taken into account.

Such placement decisions could be performed in a centralized manner. However, central or meshed solutions for component placement typically do not scale in large systems. Furthermore, such central solutions tend to provide single points of failure.

It is proposed in the present document to make use of a distributed placement scheme using the limited information available at the nodes 101 of the media cloud 100. The distributed placement scheme makes use of individual mapping functions 401 performed by the individual nodes 101. These mapping functions are separated into two sub-tasks: Topology management and Resource management. Topology management makes use of the topology information available at each of the nodes 101 (in particular, the topology graph 502 or topology list 602). A component placement request is typically accompanied with regional information about the sink or source of the application (or the component). The node checks this topology information and forwards the request to the representative of the region (or area), if the topology info does not match with his own. In other words, the node verifies if the desired sink or source location of the component is in line with the region of the node. If not, the component placement request is passed to the representative node of the appropriate area or region, which is known to the node (from the topology list 602). In a two hierarchical topology (regions and areas), maximum two steps are required to address the correct region 302. In case of a placement request for multiple components, the topology process needs only to be performed once. In other words, a list of related components (which belong to the same service or application) can be placed in a single step.

Resource management is directed at the local resource placement depending on the load status of the different nodes of the MC 100. If the node receives a component placement request and indentifies that the component should be placed within its region, then the node consults its local resource graph 501 or the table 601 to identify a node within the graph 501 which has the necessary resources to execute the component. Typically, the different nodes 101 of a network already have cached copies of the component which is to be placed. As such, it is typically only necessary to initiate the instantiation of the component on the identified node. Otherwise, the identified node may download the component from a central component database.

In an example, the node 311 (source) of Fig. 3 requests the setup of an application which has a sink involving the node 312 (sink). The question is how the node 311 can find a node which is in the proximity of the sink (or vice versa). As indicated above, the mapping function (MF) 401 in each node 101 of the MC 100 stores its own and the neighbor's resource occupations and topology information, so that each node can draw its placement decision in an autarkic way. Firstly, the available topological information is used to find a network region which is near to either the sink or source. Secondly, the local resource information of neighboring nodes in the selected region is used, so that a node can decide where to place the new component within its neighborhood. Using the above mentioned placement scheme, none of the nodes need to know the full and precise resource and topology information of the MC 100. Nevertheless, the achieved placement is almost perfect. It should be noted that in the placement scheme outlined in the present document, none of the MC nodes 101 has an extraordinary role during the online processing. As a consequence, one or several of arbitrary MC nodes 101 may fail without causing a system breakdown.

A node's mapping decision process may involve the following steps. In a first step it may be checked whether the sink (requested within the component placement request) is in the same area/region as the node. If this is not the case, then the node searches in its table 602 for a representative node in an area/region which should match the requested sink. The node forwards the component placement request to the representative node. The representative node validates that the sink is in its area and region otherwise it would have to forward the request to its individual representative from the destination region. The representative node checks its local RG 601 for the best suited MC node which is near and which has the best cost value to execute the component. It should be noted that as an application typically consists of multiple components whereby the interconnection between these components has various requirements. The placement decision can be improved if the whole or larger parts of the application graph information can be provided for a more holistic mapping decision.

As indicated above, each node 101 comprises a local resource graph 601. When receiving a component placement request, the node 101 searches for an appropriate node within its local resource graph 601 and forwards the component placement request to this node. This node also comprises a local resource graph 601 and searches for an appropriate node within its local resource graph 601 to handle the component placement request. In order to ensure a convergence of this iterative process, the forwarding of a component placement request may be submitted to a condition regarding a minimum required improvement. In particular, it may be specified that a component placement request can only be forwarded to a node within the local resource graph 601, if this leads to a minimum required improvement for the component placement (e.g. a 20% reduction of processor capacity / bandwidth, etc.).

In the following, an embodiment of the media cloud 100 involving specific area and/or region topology controllers 303 is described. The topology controller 303 of a region may be used to manage the list of all nodes of this region. The topology controller 303 is not involved in any media processing, streaming or messaging, but supports the mapping function 401 in order to establish a MC node's individual topology view. This means, that typically the topology controller 303 is not involved in the actual component placement process, but is only involved in the initialization process of each of the nodes 101. Typically, there is one topology controller per region and the topology controller functions could be part of one of the MC nodes of the region. The topology controllers may only be requested once at the MC node boot time, in order to select the nodes for the local resources graph 601 and/or the nodes of the other regions 602.

At boot time, the mapping function 401 of a node 101 addresses its topology controller 303 which was preset in a management process. The mapping function 401 recovers the topology information e.g. the area, region the node is positioned in. This information is required during the processing in order to locate components near to either a sink or source of an application/component. Furthermore, the mapping function 401 obtains a superset of neighbors (MC nodes) which the MC node can address to select the best suited neighbors out of the superset and attach these neighbor node IDs (with mapping relevant attributes) into its local Resource Graph 601. As indicated above, the Resource Graph has (preferably) a tree structure of multiple levels (d) and with a given maximum amount of children (n). Furthermore, the mapping function 401 may receive a second list of topology controllers from the neighbor region/area, thereby enabling the node to identify representative nodes of the neighbor regions/areas. I.e. the mapping function 401 may request one individual representative of each neighbor region. This representative is usually randomly selected out of the list of available nodes. This helps to distribute the load equally among the nodes of a region. The above mentioned booting process works similar if the nodes are organized in two hierarchy levels (areas and regions).

As such, during the boot process, a new node 101 may only know the address of a predetermined topology controller 303 which comprises a list of other nodes within the MC 100. The list of other nodes is used by the new node 101 to determine the area / region that the new node 101 belongs to (e.g. using a Vivaldi algorithm in conjunction with a Meridian process). As a result, the new node 101 will be assigned to a particular area / region and can be included into the list of nodes of the topology controller 303 of this area / region.

In other words, each node 101 in a particular region may perform the following tasks: The node 101 knows a controller node 303 of aregion 302. On boot request, the node 101 obtains a controller node list from all areas / regions. On boot request, the node 101 determines its region 302 and the associated controller node 303 of this region 302. On boot request, the node 101 obtains an arbitrary list of direct (region) neighbors (RG). On request, the node 101 obtains one arbitrary node from the neighbor regions / areas. The controller node 303 of a region 302 typically knows all nodes 101 in the region and knows the controller node of a superior area 102. On node request, the controller node 303 provides the node IDs of the nodes within his region. Furthermore, on node request, the controller node 303 provides a representative node of the region. The controller node 303 of an area 102 knows the controller nodes 303 in its region 302, knows the controller nodes 303 of all areas 102 and forwards area requests to neighbor controller nodes.

In the present document, an architecture for a network and corresponding computing devices (nodes) for cloud computing has been described. The described architecture allows the implementation of a decentralized application component placement scheme, which allows components of applications to be placed at appropriate nodes within a computing cloud. The described architecture is scalable to increasing demands and does not exhibit single points of failure. Furthermore, the described architecture enables the reduction of bandwidth resources required within a communication network when using cloud computing.

It should be noted that the description and drawings merely illustrate the principles of the proposed methods and systems. Furthermore, all examples recited herein are principally intended expressly to be only for pedagogical purposes to aid the reader in understanding the principles of the proposed methods and systems.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A computing device (101), referred to as the particular computing device (101), wherein
- the particular computing device (101) is positioned in a first topological area (102);
- the particular computing device (101) comprises a topological list (602) indicating a plurality of reference computing devices positioned in a plurality of topological areas (102) other than the first topological area (102), respectively;
- the particular computing device (101) comprises a local resource list (601) indicating available computing resources of the particular computing device (101) and of at least one neighbor computing device (101) positioned in a neighborhood of the particular computing device (101); wherein the reference computing device of the topological area (102) from the plurality of topological areas (102) other than the first topological area (102) also comprises a respective topological list (602) and a respective local resource list (601);
- upon receiving a component placement request for a component (703) of an application (700); wherein the application comprises a plurality of components (703) which are to be executed by a plurality of computing devices; wherein the component placement request comprises information regarding a preferred location of a sink (702) or a source (701) of the application (700) or of the component (703) of the application (700), wherein the particular computing device (101) is adapted to
- determine, based only on the topological list (602), if the component (703) is to be placed in the first topological area (102) or in one of the plurality of topological areas (102) other than the first topological area (102);
- if it is determined that the component (703) is to be placed in one of the plurality of topological areas other than the first topological area, pass the component placement request to the reference computing device of the respective topological area of the plurality of topological areas other than the first topological area;
- if it is determined that the component (703) is to be placed in the first topological area (102), identify from the local resource list (601) a selected computing device having the computing resources for executing the component of the application without consulting another computing device or a higher level network management entity; and
- if the selected computing device Is the particular computing device (101), execute the component (703) of the application (700) on the particular computing device (101), else pass the component placement request for the component (703) of the application (700) to the selected computing device from the local resource list (601).

2. The computing device (101) of claim 1, wherein the computing device (101) is adapted to receive information regarding the computing resources of the at least one neighbor computing device (101) from the at least one neighbor computing device (101).

3. The computing device (101) of claim 1, wherein the computing device (101) is adapted to
- receive a list of first computing devices (101) comprised within the first topological area (102); and
- select a plurality of neighbor computing devices (101) from the list of first computing devices (101) for the local resource list (601), based on
- the computing resources of the first computing devices (101); and/or
- a bandwidth usage of a link of the computing device (101).

4. The computing device (101) of claim 3, wherein the computing device (101) is adapted to
- replace a neighbor computing device (101) in the local resource list (601) by a new neighbor computing device (101) from the list of first computing devices (101).

5. The computing device (101) of any previous claim, wherein
- the topological areas (102) are sub-divided into one or more regions (302); and
- the topological list (602) indicates a plurality of reference computing devices positioned in the one or more regions (302) of the plurality of topological areas (102).

6. The computing device (101) of any previous claim, wherein the computing resources of a computing device (101) are any one or more of: processor resources of the computing device (101), memory resources of the computing device (101), and bandwidth of a link to the computing device (101).

7. The computing device (101) of any previous claim, wherein the at least one neighbor computing device (101) is positioned in the first topological area (102).

8. A distributed network (100), the network comprising
- a first plurality of computing devices (101) according to any of claims 1 to 7, in a first topological area (102); and
- a second plurality of computing devices (101) according to any of claims 1 to 7, in a second topological area (102);
wherein the first and second pluralities of computing devices (101) comprise corresponding first and second pluralities of topological lists (602); wherein the first plurality of topological lists (602) indicates a corresponding first plurality of reference computing devices (101) of the second plurality of computing devices (101) and vice versa.

9. The distributed network (100) of claim 8, wherein the first plurality of reference computing devices (101) is a random selection of the second plurality of computing devices (101) and vice versa.

10. The distributed network (100) of any of claims 8 to 9, further comprising a first controller node (303) and a second controller node (303) in the first and second topological areas (102), respectively; wherein the first and second controller nodes (303) provide an indication of the first and second plurality of computing devices (101), respectively.

11. The distributed network (100) of claim 10, wherein the first controller node (303) provides an indication to the second controller node (303) and vice versa.

12. The distributed network (100) of any of claims 8 to 11. wherein
- each of the first and second plurality of computing devices (101) comprises a local resource list (601) indicative of computing resources of a predetermined number of neighbor computing devices (101) in a neighborhood of the respective computing device (101);
- each of the first and second plurality of computing devices (101) is adapted to process a component placement request based only on its local resource list (601) and on its topological list (602), independently from the others of the first and second plurality of computing devices (101).

13. A method for placing a component (703) of an application (700) in a distributed network of computing devices (101) according to any of claims 1 to 7, wherein the application comprises a plurality of components (703) which are to be executed by a plurality of computing devices from the distributed network; the method comprising
- receiving a component placement request at a first computing device (101) in a first topological area (102); wherein the component placement request comprises information regarding a preferred location of a sink (702) or a source (701) of the application (700) or of the component (703) of the application (700);
- determining, based only on a topological list of the first computing device (101), if the component (703) is to be placed in the first topological area (102) or in one of a plurality of topological areas other than the first topological area;
- if it is determined that the component (703) is to be placed in one of the plurality of topological areas (102) other than the first topological area (102), passing the component placement request to a reference computing device (101) of the respective topological area of the plurality of topological areas other than the first topological area; wherein the reference computing device of the topological area (102) from the plurality of topological areas (102) other than the first topological area (102) also comprises a respective topological list (602) and a respective local resource list (601);
- if it is determined that the component (703) is to be placed In the first topological area (102), identifying from a local resource list (601) of the first computing device (101), a selected computing device having computing resources for executing the component of the application without consulting another computing device or a higher level network management entity; and
- if the selected computing device is the first computing device (101), executing the component (703) of the application (700) on the first computing device (101), else passing the component placement request for the component (703) of the application (700) to the selected computing device from the local resource list (601).

14. The method of claim 13, further comprising, during an Initialization stage,
- determining relative positions of the computing devices (101) of the distributed network (100) using e.g. a Vivaldi algorithm; and
- clustering the computing devices (101) into the first topological area (102) and into the pluralité of topological areas (102) other than the first topological area (102) using e.g. a Meridian algorithm.

15. The method of any of claims 13 to 14 wherein
- the component placement request comprises information regarding a location of a sink (702) or a source (701) of data processed by the component; and
- the topological area (102) for placing the component is determined based on the location of the sink (702) or the source (701).

## Patentansprüche

1. Rechenvorrichtung (101), als die besondere Rechenvorrichtung (101) bezeichnet, wobei
- die besondere Rechenvorrichtung (101) in einem ersten topologischen Bereich (102) positioniert ist;
- die besondere Rechenvorrichtung (101) eine topologische Liste (602) umfasst, welche eine Vielzahl von jeweils in einer Vielzahl von topologischen Bereichen (102), die sich von dem ersten topologischen Bereich (102) unterscheiden, positionierten Referenz-Rechenvorrichtungen anzeigt;
- die besondere Rechenvorrichtung (101) eine lokale Ressourcenliste (601) umfasst, welche verfügbare Rechenressourcen der besonderen Rechenvorrichtung (101) und mindestens einer in einer Nachbarschaft der besonderen Rechenvorrichtung (101) positionieren benachbarten Rechenvorrichtung (101) anzeigt, wobei die Referenz-Rechenvorrichtung des topologischen Bereichs (102) unter der Vielzahl von sich von dem ersten topologischen Bereich (102) unterscheidenden topologischen Bereichen (102) ebenfalls eine jeweilige topologische Liste (602) und eine jeweilige lokale Ressourcenliste (601) umfasst;
- wobei, nach Empfang einer Komponentenpositionierungsanforderung für eine Komponente (703) einer Anwendung (700), wobei die Anwendung eine Vielzahl von Komponenten (703) umfasst, welche durch eine Vielzahl von Rechenvorrichtungen auszuführen sind; wobei die Komponentenpositionierungsanforderung Informationen in Bezug auf eine bevorzugte Position einer Senke (702) oder einer Quelle (701) der Anwendung (700) oder der Komponente der Anwendung (700) enthält, die besondere Rechenvorrichtung (101) für Folgendes ausgelegt ist:
- Ermitteln, ausschließlich auf der Basis der topologischen Liste (602), ob die Komponente (703) in dem ersten topologischen Bereich (102) oder in einem der Vielzahl von topologischen Bereichen (102), welcher sich von dem ersten topologischen Bereich (102) unterscheidet, zu positionieren ist;
- wenn ermittelt wird, dass die Komponente (703) in einem der Vielzahl von topologischen Bereichen, der sich von dem ersten topologischen Bereich unterscheidet, zu positionieren ist, Weiterreichen der Komponentenpositionierungsanforderung an die Referenz-Rechenvorrichtung des jeweiligen topologischen Bereichs der Vielzahl von topologischen Bereichen, welcher sich von dem ersten topologischen Bereich unterscheidet;
- wenn ermittelt wird, dass die Komponente (703) in dem ersten topologischen Bereich (102) zu positionieren ist, Identifizieren, aus der lokalen Ressourcenliste (601), einer ausgewählten Rechenvorrichtung, welche über die Rechenressourcen zur Ausführung der Komponente der Anwendung verfügt, ohne eine andere Rechenvorrichtung oder eine übergeordnete Netzwerkverwaltungsentität zu befragen; und
- wenn die ausgewählte Rechenvorrichtung die besondere Rechenvorrichtung (101) ist, Ausführen der Komponente (703) der Anwendung (700) auf der besonderen Rechenvorrichtung (101), und anderenfalls Weiterreichen der Komponentenpositionierungsanforderung für die Komponente (703) der Anwendung (700) an die ausgewählte Rechenvorrichtung aus der lokalen Ressourcenliste (601).

2. Rechenvorrichtung (101) nach Anspruch 1, wobei die Rechenvorrichtung (101) für den Empfang von Information in Bezug auf die Rechenressourcen der mindestens einen benachbarten Rechenvorrichtung (101) von der mindestens einen benachbarten Rechenvorrichtung (101 ausgelegt ist.

3. Rechenvorrichtung (101) nach Anspruch 1, wobei die Rechenvorrichtung (101) für Folgendes ausgelegt ist:
- Empfangen einer Liste der innerhalb des ersten topologischen Bereiches (102) umfassten ersten Rechenvorrichtungen (101); und
- Auswählen einer Vielzahl von benachbarten Rechenvorrichtungen (101) aus der Liste der ersten Rechenvorrichtungen (101) für die lokale Ressourcenliste (601) auf der Basis
- der Rechenressourcen der ersten Rechenvorrichtungen (101); und/oder
- einer Bandbreitennutzung einer Verbindung der Rechenvorrichtung (101).

4. Rechenvorrichtung (101) nach Anspruch 3, wobei die Rechenvorrichtung (101) für Folgendes ausgelegt ist:
- Ersetzen einer benachbarten Rechenvorrichtung (101) in der lokalen Ressourcenliste (601) durch eine neue benachbarte Rechenvorrichtung (101) aus der Liste von ersten Rechenvorrichtungen (101).

5. Rechenvorrichtung (101) nach einem beliebigen der vorstehenden Ansprüche, wobei
- die topologischen Bereiche (102) in eine oder mehrere Regionen (302) unterteilt werden; und
- die topologische Liste (602) eine Vielzahl von Referenz-Rechenvorrichtungen, die in der einen oder in mehreren Regionen (302) der Vielzahl von topologischen Bereichen (102) positioniert sind, anzeigt.

6. Rechenvorrichtung (101) nach einem beliebigen der vorstehenden Ansprüche, wobei die Rechenressourcen einer Rechenvorrichtung (101) eine beliebige oder mehrere der folgenden sind: Prozessorressourcen der Rechenvorrichtung (101), Speicherressourcen der Rechenvorrichtung (101), und Bandbreite einer Verbindung zu der Rechenvorrichtung (101).

7. Rechenvorrichtung (101) nach einem beliebigen der vorstehenden Ansprüche, wobei die mindestens eine benachbarte Rechenvorrichtung (101) in dem ersten topologischen Bereich (102) positioniert ist.

8. Verteiltes Netzwerk (100), wobei das Netzwerk umfasst:
- Eine erste Vielzahl von Rechenvorrichtungen (101) gemäß einem beliebigen der Ansprüche 1 bis 7, in einem ersten topologischen Bereich (102); und
- eine zweite Vielzahl von Rechenvorrichtungen (101) gemäß einem beliebigen der Ansprüche 1 bis 7, in einem zweiten topologischen Bereich (102);
wobei die erste und die zweite Vielzahl von Rechenvorrichtungen (101) entsprechende erste und zweite Vielzahlen von topologischen Listen (602) umfassen; wobei die erste Vielzahl von topologischen Listen (602) eine entsprechende erste Vielzahl von Referenz-Rechenvorrichtungen (101) der zweiten Vielzahl von Rechenvorrichtungen (101) anzeigt, und umgekehrt.

9. Verteiltes Netzwerk (100) nach Anspruch 8, wobei die erste Vielzahl von Referenz-Rechenvorrichtungen (101) eine Zufallsauswahl der zweiten Vielzahl von Rechenvorrichtungen (101) ist, und umgekehrt.

10. Verteiltes Netzwerk (100) nach einem beliebigen der Ansprüche 8 bis 9, weiterhin umfassend einen ersten Steuerknoten (303) und einen zweiten Steuerknoten (303) jeweils in dem ersten und dem zweiten topologischen Bereich (102); wobei der erst und der zweite Steuerknoten (303) jeweils eine Angabe der ersten und der zweiten Vielzahl von Rechenvorrichtungen (101) bereitstellen.

11. Verteiltes Netzwerk (100) nach Anspruch 10, wobei der erste Steuerknoten (303) eine Angabe an den zweiten Steuerknoten (303) bereitstellt, und umgekehrt.

12. Verteiltes Netzwerk (100) nach einem beliebigen der Ansprüche 8 bis 11, wobei
- Eine jede der ersten und der zweiten Vielzahl von Rechenvorrichtungen (101) eine lokale Ressourcenliste (601) umfasst, welche für die Rechenressourcen einer vorbestimmten Anzahl von benachbarten Rechenvorrichtungen (101) in einer Nachbarschaft der jeweiligen Rechenvorrichtung (101) indikativ ist;
- eine jede der ersten und zweiten Vielzahl von Rechenvorrichtungen (101) für die Verarbeitung einer Komponentenpositionierungsanforderung auf der Basis ausschließlich ihrer lokalen Ressourcenliste (601) und ihrer topologischen Liste (602), unabhängig von den anderen der ersten und zweiten Vielzahl von Rechenvorrichtungen (101), ausgelegt ist.

13. Verfahren zur Positionierung einer Komponente (703) einer Anwendung (700) in einem verteilten Netzwerk von Rechenvorrichtungen (101) gemäß einem beliebigen der Ansprüche 1 bis 7, wobei die Anwendung eine Vielzahl von Komponenten (703) umfasst, die durch eine Vielzahl von Rechenvorrichtungen aus dem verteilten Netzwerk auszuführen sind; wobei das Verfahren umfasst:
- Empfangen einer Komponentenpositionierungsanforderung an einer ersten Rechenvorrichtung (101) in einem ersten topologischen Bereich (102); wobei die Komponentenpositionierungsanforderung Informationen in Bezug auf eine bevorzugte Position einer Senke (702) oder einer Quelle (701) der Anwendung (700) oder der Komponente (703) der Anwendung (700) enthält;
- Ermitteln, ausschließlich auf der Basis der topologischen Liste der ersten Rechenvorrichtung (101), ob die Komponente (703) in dem ersten topologischen Bereich (102) oder in einem der Vielzahl von topologischen Bereichen, welcher sich von dem ersten topologischen Bereich unterscheidet, zu positionieren ist;
- wenn ermittelt wird, dass die Komponente (703) in einem der Vielzahl von topologischen Bereichen (102), der sich von dem ersten topologischen Bereich (102) unterscheidet, zu positionieren ist, Weiterreichen der Komponentenpositionierungsanforderung an eine Referenz-Rechenvorrichtung (101) des jeweiligen topologischen Bereichs der Vielzahl von topologischen Bereichen, welcher sich von dem ersten topologischen Bereich unterscheidet; wobei die Referenz-Rechenvorrichtung des topologischen Bereichs (102) aus der Vielzahl von topologischen Bereichen (102), welcher sich von dem ersten topologischen Bereich (102) unterscheidet, ebenfalls eine jeweilige topologische Liste (602) und eine jeweilige lokale Ressourcenliste (601) umfasst;
- wenn ermittelt wird, dass die Komponente (703) in dem ersten topologischen Bereich (102) zu positionieren ist, Identifizieren, aus der lokalen Ressourcenliste (601) der ersten Rechenvorrichtung (101), einer ausgewählten Rechenvorrichtung, welche über Rechenressourcen zur Ausführung der Komponente der Anwendung verfügt, ohne eine andere Rechenvorrichtung oder eine übergeordnete Netzwerkverwaltungsentität zu befragen; und
- wenn die ausgewählte Rechenvorrichtung die erste Rechenvorrichtung (101) ist, Ausführen der Komponente (703) der Anwendung (700) auf der ersten Rechenvorrichtung (101), und anderenfalls Weiterreichen der Komponentenpositionierungsanforderung für die Komponente (703) der Anwendung (700) an die ausgewählte Rechenvorrichtung aus der lokalen Ressourcenliste (601).

14. Verfahren nach Anspruch 13, weiterhin umfassend, während einer Initialisierungsstufe,
- Ermitteln von relativen Positionen der Rechenvorrichtungen (101) des verteilten Netzwerks (100) unter Verwendung beispielsweise eines Vivaldi-Algorithmus; und
- Gruppieren der Rechenvorrichtungen (101) in den ersten topologischen Bereich (102) und in die Vielzahl von topologischen Bereichen (102), welche sich von dem ersten topologischen Bereich (102) unterscheiden, unter Verwendung beispielsweise eines Meridian-Algorithmus.

15. Verfahren nach Anspruch 13 bis 14, wobei
- die Komponentenpositionierungsanforderung Informationen in Bezug auf eine Position einer Senke (702) oder einer Quelle (701) von durch die Komponente verarbeiteten Daten enthält; und
- der topologische Bereich (102) für die Positionierung der Komponente auf der Basis der Position der Senke (702) oder der Quelle (701) bestimmt wird.

## Revendications

1. Dispositif informatique (101), appelé dispositif informatique particulier (101), dans lequel
- le dispositif informatique particulier (101) est positionné dans une première zone topologique (102) ;
- le dispositif informatique particulier (101) comprend une liste topologique (602) indiquant une pluralité de dispositifs informatiques de référence positionnés dans une pluralité de zones topologiques (102) autres que la première zone topologique (102), respectivement ;
- le dispositif informatique particulier (101) comprend une liste de ressources locales (601) indiquant les ressources informatiques disponibles du dispositif informatique particulier (101) et d'au moins un dispositif informatique voisin (101) positionné dans un voisinage du dispositif informatique particulier (101) ; dans lequel le dispositif informatique de référence de la zone topologique (102) parmi la pluralité de zones topologiques (102) autres que la première zone topologique (102) comprend également une liste topologique respective (602) et une liste de ressources locales respective (601) ;
- lors de la réception d'une requête de placement de composant pour un composant (703) d'une application (700) ; dans lequel l'application comprend une pluralité de composants (703) qui doivent être exécutés par une pluralité de dispositifs informatiques ; dans lequel la requête de placement de composant comprend des informations concernant un emplacement préféré d'un collecteur (702) ou d'une source (701) de l'application (700) ou du composant (703) de l'application (700), dans lequel le dispositif informatique particulier (101) est adapté pour
- déterminer, uniquement sur la base de la liste topologique (602), si le composant (703) doit être placé dans la première zone topologique (102) ou dans une zone parmi la pluralité de zones topologiques (102) autres que la première zone topologique (102) ;
- s'il est déterminé que le composant (703) doit être placé dans une zone parmi la pluralité de zones topologiques autres que la première zone topologique, transférer la requête de placement de composant vers le dispositif informatique de référence de la zone topologique respective parmi la pluralité de zones topologiques autres que la première zone topologique ;
- s'il est déterminé que le composant (703) doit être placé dans la première zone topologique (102), identifier à partir de la liste de ressources locales (601) un dispositif informatique sélectionné ayant les ressources informatiques pour exécuter le composant de l'application sans consulter un autre dispositif informatique ou une entité de gestion de réseau de niveau supérieur ; et
- si le dispositif informatique sélectionné est le dispositif informatique particulier (101), exécuter le composant (703) de l'application (700) sur le dispositif informatique particulier (101), sinon transférer la requête de placement du composant pour le composant (703) de l'application (700) vers le dispositif informatique sélectionné à partir de la liste de ressources locales (601).

2. Dispositif informatique (101) selon la revendication 1, le dispositif informatique (101) étant adapté pour recevoir des informations concernant les ressources informatiques de l'au moins un dispositif informatique voisin (101) à partir de l'au moins un dispositif informatique voisin (101).

3. Dispositif informatique (101) selon la revendication 1, le dispositif informatique (101) étant adapté pour
- recevoir une liste de premiers dispositifs informatiques (101) compris dans la première zone topologique (102) ; et
- sélectionner une pluralité de dispositifs informatiques voisins (101) à partir de la liste de premiers dispositifs informatiques (101) pour la liste de ressources locales (601), sur la base
- des ressources informatiques des premiers dispositifs informatiques (101) ; et/ou
- d'une utilisation de la bande passante d'une liaison du dispositif informatique (101).

4. Dispositif informatique (101) selon la revendication 3, le dispositif informatique (101) étant adapté pour
- remplacer un dispositif informatique voisin (101) dans la liste de ressources locales (601) par un nouveau dispositif informatique voisin (101) parmi la liste des premiers dispositifs informatiques (101).

5. Dispositif informatique (101) selon l'une quelconque des revendications précédentes, dans lequel
- les zones topologiques (102) sont subdivisées en une ou plusieurs régions (302) ; et
- la liste topologique (602) indique une pluralité de dispositifs informatiques de référence positionnés dans la ou les région(s) (302) de la pluralité de zones topologiques (102).

6. Dispositif informatique (101) selon l'une quelconque des revendications précédentes, dans lequel les ressources informatiques d'un dispositif informatique (101) sont l'un quelconque ou plusieurs des éléments suivants : des ressources de processeur du dispositif informatique (101), des ressources de mémoire du dispositif informatique (101) et la bande passante d'une liaison vers le dispositif informatique (101).

7. Dispositif informatique (101) selon l'une quelconque des revendications précédentes, dans lequel l'au moins un dispositif informatique voisin (101) est positionné dans la première zone topologique (102).

8. Réseau distribué (100), le réseau comprenant
- une première pluralité de dispositifs informatiques (101) selon l'une quelconque des revendications 1 à 7, dans une première zone topologique (102) ; et
- une deuxième pluralité de dispositifs informatiques (101) selon l'une quelconque des revendications 1 à 7, dans une deuxième zone topologique (102);
dans lequel la première et la deuxième pluralités de dispositifs informatiques (101) comprennent une première et une deuxième pluralités correspondantes de listes topologiques (602) ; dans lequel la première pluralité de listes topologiques (602) indique une première pluralité correspondante de dispositifs informatiques de référence (101) de la deuxième pluralité de dispositifs informatiques (101) et inversement.

9. Réseau distribué (100) selon la revendication 8, dans lequel la première pluralité de dispositifs informatiques de référence (101) est une sélection aléatoire de la deuxième pluralité de dispositifs informatiques (101) et inversement.

10. Réseau distribué (100) selon l'une quelconque des revendications 8 et 9, comprenant en outre un premier noeud de contrôle (303) et un deuxième noeud de contrôle (303) dans la première et la deuxième zones topologiques (102), respectivement; dans lequel le premier et le deuxième noeuds de contrôle (303) fournissent une indication de la première et de la deuxième pluralités de dispositifs informatiques (101), respectivement.

11. Réseau distribué (100) selon la revendication 10, dans lequel le premier noeud de contrôle (303) fournit une indication au deuxième noeud de contrôle (303) et inversement.

12. Réseau distribué (100) selon l'une quelconque des revendications 8 à 11, dans lequel
- chaque dispositif informatique parmi la première et la deuxième pluralités de dispositifs informatiques (101) comprend une liste de ressources locales (601) indiquant des ressources informatiques d'un nombre prédéterminé de dispositifs informatiques voisins (101) dans un voisinage du dispositif informatique respectif (101) ;
- chaque dispositif informatique parmi la première et la deuxième pluralités de dispositifs informatiques (101) est adapté pour traiter une requête de placement de composant uniquement sur la base de sa liste de ressources locales (601) et de sa liste topologique (602), indépendamment des autres dispositifs informatiques parmi la première et la deuxième pluralités de dispositifs informatiques (101).

13. Procédé pour placer un composant (703) d'une application (700) dans un réseau distribué de dispositifs informatiques (101) selon l'une quelconque des revendications 1 à 7, dans lequel l'application comprend une pluralité de composants (703) qui doivent être exécutés par une pluralité de dispositifs informatiques à partir du réseau distribué ; le procédé comprenant les étapes suivantes
- recevoir une requête de placement de composant au niveau d'un premier dispositif informatique (101) dans une première zone topologique (102) ; dans lequel la requête de placement de composant comprend des informations concernant un emplacement préféré d'un collecteur (702) ou d'une source (701) de l'application (700) ou du composant (703) de l'application (700) ;
- déterminer, uniquement sur la base d'une liste topologique du premier dispositif informatique (101), si le composant (703) doit être placé dans la première zone topologique (102) ou dans une zone parmi une pluralité de zones topologiques autres que la première zone topologique ;
- s'il est déterminé que le composant (703) doit être placé dans une zone parmi la pluralité de zones topologiques (102) autres que la première zone topologique (102), transférer la requête de placement de composant vers un dispositif informatique de référence (101) de la zone topologique respective parmi la pluralité de zones topologiques autres que la première zone topologique ; dans lequel le dispositif informatique de référence de la zone topologique (102) parmi la pluralité de zones topologiques (102) autres que la première zone topologique (102) comprend également une liste topologique respective (602) et une liste de ressources locales respective (601) ;
- s'il est déterminé que le composant (703) doit être placé dans la première zone topologique (102), identifier à partir d'une liste de ressources locales (601) du premier dispositif informatique (101), un dispositif informatique sélectionné ayant des ressources informatiques pour exécuter le composant de l'application sans consulter un autre dispositif informatique ou une entité de gestion de réseau de niveau supérieur ; et
- si le dispositif informatique sélectionné est le premier dispositif informatique (101), exécuter le composant (703) de l'application (700) sur le premier dispositif informatique (101), sinon transférer la requête de placement de composant pour le composant (703) de l'application (700) vers le dispositif informatique sélectionné à partir de la liste de ressources locales (601).

14. Procédé selon la revendication 13, comprenant en outre, durant une étape d'initialisation, les étapes suivantes
- déterminer des positions relatives des dispositifs informatiques (101) du réseau distribué (100) en utilisant, par exemple, un algorithme Vivaldi ; et
- regrouper les dispositifs informatiques (101) dans la première zone topologique (102) et dans la pluralité de zones topologiques (102) autres que la première zone topologique (102) en utilisant, par exemple, un algorithme Meridian.

15. Procédé selon l'une quelconque des revendications 13 à 14, dans lequel
- la requête de placement de composant comprend des informations concernant un emplacement d'un collecteur (702) ou d'une source (701) de données traitées par le composant ; et
- la zone topologique (102) pour placer le composant est déterminée sur la base de l'emplacement du collecteur (702) ou de la source (701).
